## Europäisches Patentamt
## European Patent Office
## Office européen des brevets

(11) Veröffentlichungsnummer : **0 340 531 B1**

(12) **EUROPÄISCHE PATENTSCHRIFT**

(45) Veröffentlichungstag der Patentschrift :
25.03.92 Patentblatt 92/13

(51) Int. Cl.⁵ : **C03C 8/16**

(21) Anmeldenummer : **89107000.5**

(22) Anmeldetag : **19.04.89**

(54) **Verfahren zur Herstellung von Glasur-Agglomeraten durch Extrusion, nach diesem Verfahren erzeugte Glasuren und damit glasierte Werkstücke.**

(30) Priorität : **02.05.88 IT 2041788**

(43) Veröffentlichungstag der Anmeldung :
**08.11.89 Patentblatt 89/45**

(45) Bekanntmachung des Hinweises auf die
Patenterteilung :
**25.03.92 Patentblatt 92/13**

(84) Benannte Vertragsstaaten :
**AT BE CH DE ES FR GB GR IT LI LU NL SE**

(56) Entgegenhaltungen :
**FR-A- 2 255 267**
**PATENT ABSTRACTS OF JAPAN vol. 8, no. 98**
**(C-221)(1535) 09 Mai 1984, & JP-A-59 013648**
**(MATSUSHITA DENKO) 24 Januar 1984,**
**CHEMICAL ABSTRACTS, vol. 101, no. 4, 23 Juli**
**1984 Columbus, Ohio, USA Seite 234; ref. no.**
**27424G & JP-A-59041477 (MATSUSHITA) (7**
**März 1984)**

(73) Patentinhaber : **BAYER ITALIA S.p.A.**
**Viale Certosa 126**
**I-20156 Milano (IT)**

(72) Erfinder : **Brunetti, Palmiro**
**Strada S. Galigano Di S. Lucia 22**
**(PG) (IT)**
Erfinder : **Capitanio, Luigi**
**Via Bergamo, 62**
**Capriate SG (BG) (IT)**
Erfinder : **Salge, Henning Max**
**Via Fossetta, 20**
**Sassuolo (MO) (IT)**
Erfinder : **Schlegel, Felix**
**Via Loira, 15**
**Spezzano di Fiorano (MO) (IT)**

(74) Vertreter : **Braun, Rolf, Dr. et al**
**Bayer AG Konzernverwaltung RP**
**Patentabteilung**
**W-5090 Leverkusen, Bayerwerk (DE)**

## Beschreibung

Die vorliegende Erfindung betrifft ein neuartiges Verfahren zur Herstellung von Glasur-Agglomeraten durch Extrusion.

Im einzelnen betrifft die vorliegende Erfindung ein Verfahren für die Herstellung von Glasur-Agglomeraten durch Extrusion, mit dem sich eine gesteigerte Produktionsleistung, eine hohe Qualität sowie vielfältige Formen und Abmessungen der Agglomerate bei einem Mindestmaß an Abfall beim Glasieren erzielen lassen, so daß der Wasserverbrauch und der Anfall an Schlämmen beachtlich verringert werden kann, mit der entsprechenden Energieeinsparung und Senkung der Kosten als Folge.

Den einschlägigen Fachleuten ist bekannt, daß ein keramischer Gegenstand in der Regel aus einer tonhaltigen Masse und aus einem glasartigen Oberflächenüberzug mit geeigneter Formulierung besteht, um dem Gegenstand nach dem Brand bei hohen Temperaturen bessere physikalische Eigenschaften und ein verbessertes Aussehen zu verleihen.

Ebenfalls ist bekannt, daß der glasartige Überzug durch Aufbringen von Glasuren erzeugt wird, die aus feinvermahlenen Gemischen folgender Bestandteile bestehen:

a) Borsilikatische Glasurfritten unterschiedlicher Zusammensetzung, die während des Brandes des Keramikgegenstandes schmelzen und eine dichte Schicht bilden;

b) Pigmente, bestehend aus anorganischen Stoffen mit farbgebenden Eigenschaften, die bei den Brenntemperaturen des Keramikgegenstandes beständig sind und von der glasurartigen Schicht eingeschlossen werden, der sie die gewünschten Farbeigenschaften verleihen;

c) Suspendiermittel, also Tone, Kaoline und weitere Stoffe, die erforderlich sind, um bei den Naßglasuren rheologische Eigenschaften zu erzeugen, die für die Anwendung geeignet sind; schließlich kann der Einsatz weiterer spezifischer anorganischer Stoffe erforderlich sein, um in der Glasur besondere Effekte zu erzeugen, wie eine Weißtrübung, eine besondere Oberflächenbeschaffenheit oder sonstige Eigenschaften.

Für den Naßglasurauftrag werden die Glasuren in der Regel in HALSING-Mühlen unter Zugabe von Wasser gemahlen, wobei man eine Suspension oder einen flüssigen Schlicker erhält, der auf den Keramikgegenstand nach unterschiedlichen Verfahren aufgebracht werden kann, von denen folgende hier genannt werden:

1) Spritzverfahren:

hierbei wird die Glasur mit Hilfe von Spritzdüsen und Preßluft oder einer Druckpumpe zerstäubt, wobei der Strahl auf die zu beschichtende Oberfläche gerichtet wird;

2) Tauchverfahren:

hierbei wird der zu beschichtende Gegenstand in den Glasurschlicker eingetaucht, so daß die gesamte Oberfläche glasiert wird;

3) Glockenverfahren:

hierbei läßt man den Glasurschlicker kontinuierlich über einen glockenförmigen Körper in Form eines senkrechten Schleiers herabfließen, während der zu beschichtende Gegenstand in waagerechter Richtung darunter hindurchgezogen wird. Dieses Verfahren eignet sich nur für die Beschichtung von ebenen Oberflächen;

4) Wasserfallverfahren:

hierbei handelt es sich um ein ähnliches Verfahren wie im vorausgehenden Fall, jedoch wird der Glasurschleier durch einen Trichter mit einem regulierbaren waagerechten Schlitz erzeugt;

5) Scheibenschleuderverfahren:

hierbei wird mit einem schnell rotierenden und mit Scheiben besetzten und gelochten Hohlzylinder eine "Berieselung" mit der Glasur erzeugt. Dieses Verfahren eignet sich für die Bildung von ungleichförmigen Schichten und wird insbesondere bei Glasuren mit geringem Wassergehalt eingesetzt.

Für die großindustrielle Serienherstellung werden kontinuierlich arbeitende Maschinen eingesetzt, die für die Rückgewinnung und Wiederverwendung von überschüssigen, an dem zu beschichtenden Werkstück nicht anhaftenden Glasurmengen ausgelegt sind.

Wie zuvor erwähnt, bringt die Naßglasierung verschiedene Nachteile mit sich, bei denen nach ihrer Art drei Gruppen unterschieden werden können:

a) Qualitätseinbußen,

b) hoher Energieverbrauch und

c) Beeinträchtigung der Umwelt.

In Hinsicht auf die Qualitätseinbußen ist darauf hinzuweisen, daß während der Anwendung der umlaufende Glasurschlicker dazu neigt, seine rheologischen Eigenschaften zu verändern, vor allem durch die Verdampfung des Wassers, wodurch eine ständige Überwachung und Wiederherstellung der optimalen Verhältnisse erforderlich ist.

In Hinsicht auf den hohen Energieverbrauch ist darauf hinzuweisen, daß vor dem Brennen das naßglasierte Werkstück getrocknet werden muß, was die Zufuhr von Wärmeenergie (also einen Energieverbrauch) bedeutet. Außerdem erfordern auch der Glasurauftrag und/ oder die Beseitigung der Rückstände und Schlämme, auf die noch eingegangen wird, einen weiteren Energieverbrauch.

In Hinsicht auf die Beeinträchtigung der Umwelt ist schließlich darauf hinzuweisen, daß bei einem Produktwechsel häufig die Mühle, die Förder- und Aufbewahrungseinrichtungen sowie die Maschinen für den Glasurauftrag mit Wasser gewaschen werden müssen. Auf diese Weise gehen je nach Dauer der Produktionskampagnen Glasurmengen zwischen 1 % und 10 % verloren. Es entstehen im Verlauf dieser Waschvorgänge flüssige Emissionen, die vor ihrer Entsorgung gereinigt werden müssen. Typische Schadstoffe sind hierbei Schwermetalle und Bor, deren Beseitigung - besonders bei Bor - mit erheblichen Kosten verbunden ist.

Aus der Reinigung des Wassers und der Rückstände entsteht das Problem der Schlämme, die wegen der vorhandenen Schwermetalle gesetzlich als giftige und schädliche Abfälle eingestuft werden. Wenn ihre Wiederverwertung in der Produktion nicht möglich ist - was auf jeden Fall Schwierigkeiten aufwirft -, ist es erforderlich, sie nach den gesetzlichen Vorschriften zu beseitigen.

Um die Nachteile der Naßglasuren zu umgehen, hat man versucht, nach unterschiedlichen Verfahren Trockenglasuren in Pulverform zu verarbeiten, jedoch auch mit geringem Erfolg, vor allem wegen der Ungleichmäßigkeit der aufgebrachten Beschichtung, der ungenügenden Haftung am keramischen Werkstück und der Umweltprobleme infolge der Flüchtigkeit des Pulvers.

Bewährt haben sich hingegen seit einigen Jahren Produkte in Form von Granulaten, Tabletten und Schuppen, die für kontinuierliche Glasurauftragsverfahren auf ebenen und waagerechten Flächen geeignet sind. Das Aufbringen erfolgt mit Hilfe von Dosiergeräten. Diese Geräte bestehen üblicherweise

1) aus einem Trichter, über den das Material zugeführt wird und dessen Boden mit einem verstellbaren Spalt versehen ist;

2) aus einer Dosiervorrichtung, die aus einem Rüttelsieb mit weitmaschigem Netz oder aus zwei oder mehreren Drehwalzen besteht. Sowohl das Rüttelsieb wie auch die Drehwalze haben die Aufgabe die Glasur gleichmäßig auf die zu beschichtenden (ebenen) Werkstücke zu verteilen, die unmittelbar darunter durchgeführt werden;

3) aus einer Vorrichtung zur Rückgewinnung und Wiederverwendung der nicht verbrauchten Glasurmengen, die aus einem Auffangtrichter und einem Becherförderer besteht, durch den die rückgewonnene Glasur wieder in den Beschickungstrichter geführt wird;

4) gegebenenfalls aus einer Absaugvorrichtung mit einem Entstaubungsfilter, um Staubbelästigung zu vermeiden.

Bekannterweise werden die Glasurgranulate aus herkömmlich gemahlenen Glasuren erzeugt. Durch die Zugabe von Bindemitteln, die Granulierung in Spezialmischern und die Trocknung erhält man sphäroidförmige Granulate von gewisser Festigkeit. In der Regel ist eine abschließende Siebklassierung erforderlich, um einen gleichbleibenden Korngrößenbereich zu gewährleisten.

Mit den herkömmlichen Glasuren lassen sich auch grobkörnige Agglomerate herstellen, bei denen die Kohäsion zwischen den einzelnen Teilchen aufgebaut wird, indem man das Produkt für eine gewisse Zeit bei einer Temperatur in der Nähe des beginnenden Schmelzbereichs hält.

Aus diesen gesinterten Glasuren muß dann durch Mahlen und Klassierung ein Granulat der gewünschten Korngröße hergestellt werden.

Frittegranalien werden hingegen aus der Fritte durch Zerkleinern auf Walzenbrechern und Klassierung in den gewünschten Korngrößenbereichen hergestellt. Sie lassen sich auch mit anorganischen Pigmenten einfärben.

Schließlich gibt es Fritte-Laminate, die durch Zerkleinerung und Klassierung von beim Schmelzen der Fritten und anschließender Abschreckung zwischen Kühlwalzen entstehenden Fritteschuppen hergestellt werden.

Obwohl sie nicht die Nachteile der Naßglasuren und der Trockenglasuren in Pulverform aufweisen, werfen die Glasuren in Granulatform dennoch andere spezifische Probleme auf.

3

Alle Granulate werden als gebrauchsfertige Produkte geliefert und kommen in der vorliegenden Form zum Einsatz. Mögliche Verunreinigungen und Unregelmäßigkeiten in der Homogenität, die durch die Produktionsanlagen und Herstellungsvorgänge entstehen und gelegentlich umfangreich sein können, werden durch die dispergierende Wirkung der Mahlung nicht beseitigt, wie es bei den Naßglasuren der Fall ist; dementsprechend höher ist der Umfang an Ausschuß bei den Keramikerzeugnissen.

Wie bereits zuvor dargestellt, erfordern die gegenwärtigen Granulate eine Sichtung oder Klassierung bei der Produktion. Dies bedeutet, daß Auschuß oder abweichende Korngrößenfraktionen anfallen, mit den entsprechenden Mehrkosten für die Rückführung in die Produktion, falls sie nicht in anteiligem Umfang verkauft werden können.

Außerdem beinhaltet die Herstellung einer Glasur in Granulatform eine Reihe von Maßnahmen, die zweifellos kostenaufwendiger als jene sind, die für eine Naßglasur erforderlich sind. Die Endkosten des Produktes werden dadurch zwangsläufig höher. Schließlich ist zu berücksichtigen, daß je nach der Granulatart und dem Herstellungsverfahren die Form die Granulatkörner stets gleichbleibend ist, wobei man nur die mittleren Granulatgrößen durch unterschiedliche Korngrößenfraktionen verändern kann.

Demnach hat die vorliegende Erfindung zur Aufgabe, eine neue Art von Glasuren hervorzubringen, die weder die Nachteile der Naßglasuren noch die der sonstigen bisher bekannten Trockenglasuren aufweisen.

Nach der vorliegenden Erfindung wird diese Aufgabe erreicht, indem man eine trocken oder naß gemahlene Glasur mit einem härtenden Bindemittel mit geeigneten Eigenschaften vermischt bzw. das Bindemittel, soweit trocken gemahlen wird, schon vor oder während der Vermahlung zusetzt und hierbei eine pastöse Masse mit einer derartigen Viskosität und Plastizität erhält, daß sie sich mit Preß- oder Ziehformen extrudieren läßt. Mit einer Vorrichtung zum Schneiden und anschließenden Trocknen kann man dann Agglomerate mit geeigneten Abmessungen und ausreichender Härte herstellen, um anschließend einen Trockenglasurauftrag mit kontinuierlicher Materialzufuhr vornehmen zu können.

Nach der vorliegenden Erfindung müssen die für die Herstellung von Extrusionsagglomeraten geeigneten Bindemittel außer den zuvor angegebenen Eigenschaften durch Verdampfung und/oder Verbrennung während des Brandes des Keramikwerkstückes vor dem Aufschmelzen der Glasur entfernt werden können, um das Dichtbrennen der Glasur nicht zu beeinträchtigen. Außerdem dürfen die bei ihrer Verdampfung oder Verbrennung enstehenden Produkte keine Gefahr für die Umwelt und die Arbeitsplätze darstellen.

Beispiele für Stoffe, die sich als Bindemittels für die Herstellung von Glasur-Extrusionsagglomeraten verwenden lassen, sind pflanzliche Stärken wie Mais-, Weizen-, Reis- und Kartoffelstärke, sowie Cellulosederivate wie beisielsweise Carboxymethylcellulose, Hydroxymethylcellulose, Ethylcellulose, Hydroxypropylcellulose und Hydroxybutylcellulose.

Nach dem Verfahren der vorliegenden Erfindung muß, sofern das jeweilige Bindemittel der schon vermahlenen Glasur zugesetzt wird, dieses Bindemittel vorher gelatinisiert werden. Die gelatinisierte Stärke oder Quellstärke wird erzeugt, indem man eine Dispersion dieser Stärke in kaltem Wasser (10 bis 30°C) mit warmem Wasser (80 bis 95°C) mischt.

Die Gelatinierung der Cellulosederivate erfolgt auf umgekehrte Weise, also durch Mischen der Dispersion in warmem Wasser (80 bis 95°C) mit kaltem Wasser (10 bis 30°C).

Die Wasseranteile zu Beginn und am Ende schwanken je nach den erforderlichen Viskositäten innerhalb folgender Grenzwerte:

## Tabelle I

|  | Stärken (% Wasser) | Cellulosederivate (% Wasser) |
|---|---|---|
| Ausgangsdispersion | 40 - 70 | 40 - 70 |
| Endgelatinat | 60 - 95 | 80 - 98 |

Im folgenden sind in Tabellenform vier Beispiele für Rezepturen von Mischungen angegeben, mit denen man extrudierbare Massen erhält, wobei die in den 4 Spalten angegebenen Zahlenwerte jeweils die Gewichtsanteile der einzelnen Bestandteile angeben.

## Tabelle II

|  | 1 | 2 | 3 | 4 |
|---|---|---|---|---|
| Glasurschlicker (40 % $H_2O$) | 100 | 100 | - | - |
| Glasurpulver | - | - | 100 | 100 |
| Quellstärke | 10-70 | - | 20-110 | - |
| Gelatinisierte Cellulose |  | 20-50 |  | 30-80 |

Nach dem Verfahren der vorliegenden Erfindung können die Glasuren für die Extrusion zubereitet werden, indem man die einzelnen Bestandteile kontinuierlich oder diskontinuierlich miteinander vermischt. Im ersten Fall können Planeten-, Drehtrog- oder vergleichbare Mischer verwendet werden. Im zweiten Fall setzt man ein- oder zweistufige Schnecken- oder Schaufel-Durchlaufmischer mit kontinuierlicher Zuführung der Bestandteile ein. Ungeachtet des verwendeten Mischverfahrens oder des eingesetzten Mischers ist es unbedingt erforderlich, daß die abschließende Masse einwandfrei homogen ist.

Nach Beendigung des Mischvorganges wird die pastöse Masse in den Extruder eingegeben, der aus einer Hochdruckschnecke und aus einem waagerechten Extrusionskopf besteht; das Extrudat wird senkrecht fallengelassen. Am Extrusionskopf ist ein Schneidwerk mit einem oder mehreren Drehmessern angebracht, so daß sich Teilchen herstellen lassen, deren Länge durch entsprechende Einstellung der Drehgeschwindigkeit der Messer nach Belieben geändert werden kann.

Unmittelbar nach dem Abschneiden müssen die Agglomerate einer raschen Oberflächentrocknung unterzogen werden, um zu vermeiden, daß sie aneinanderkleben. Zu diesem Zweck kann man Heißluft in die Schneidzone blasen, beispielsweise mit Hilfe eines Gebläses und eines Luftstom-Verteilers in Form eines durchlöcherten Zylinders.

Anschließend werden diese Teilchen auf 100-120°C erwärmt, und zwar vorzugsweise in Durchlauf-Bandtrocknern mit einem Rüttelwerk, oder mit anderen Einrichtungen, mit denen sich die vorzugsweise in einer einzigen Schicht oder jedenfalls dünnschichtig angeordneten Agglomerate erwärmen lassen. Diese Erwärmung bewirkt die Härtung der Bindemittel. Mit den nach dem Verfahren der vorliegenden Erfindung durch Extrusion hergestellten Glasur-Agglomeraten läßt sich eine gesteigerte Produktionsleistung erreichen. Tatsächlich kann praktisch die gesamte Glasurmenge zu einem Agglomerat gleicher Form und Größe und daher ohne Abfall oder Korngrößenfraktionen verarbeitet werden, die wieder zurückzuführen sind. Außerdem lassen sich Agglomerate in einer Vielzahl unterschiedlicher Formen und Abmessungen herstellen.

Durch Mischungen der Glasuragglomerate unterschiedlicher Zusammensetzungen, Dimensionen und Einfärbungen ergibt sich eine große Vielfältigkeit bei der ästhetischen Gestaltung der Glasuren, wobei diese durch einen einzigen Glasurauftrag erreicht werden.

Das Verfahren der Herstellung nach der vorliegenden Erfindung ermöglicht auch ein hohes Maß an Homogenität und verringert die Gefahr von Verunreinigungen, was eine verbesserte Qualität des glasierten Produktes zur Folge hat.

Das Verfahren gemäß der Erfindung ermöglicht eine Verringerung des anfallenden Glasurabfalls auf ein Mindestmaß; in der Tat sind bei der Verarbeitung keine Vorrichtungen für die Vorratshaltung und den damit verbundenen Transport der Glasur mehr erforederlich. Die Reinigungsarbeiten bei einer Produktionsumstellung beschränken sich allein auf das Dosiergerät, wobei die im Verarbeitungszyklus befindliche Glasur fast vollständig wiederverwertbar ist.

Da eine Spülung der Verarbeitungsvorrichtungen nicht mehr erforderlich ist, verringern sich ferner auch erheblich die Mengen des zu klärenden Wassers und der zu beseitigenden Schlämme.

Da hier bei der Trocknung deutlich weniger Wasser zu verdampfen ist, vermindert sich der Energiebedarf für den Glasurauftrag.

Wegen der verhältnismäßig einfachen Art des Verfahrens der Herstellung gemäß der vorliegenden Erfin-

5

dung, wegen der hohen Produktionsleistung und wegen der sonstigen Vorteile ist schließlich der Trockenglasurauftrag mit den Extrusionsagglomeraten gemäß der vorliegenden Erfindung zu Gesamtkosten möglich, die in gleicher Höhe wie die des Naßglasurauftrags oder geringfügig darüber liegen.

**Patentansprüche**

1. Verfahren zur Herstellung von Glasur-Agglomeraten, dadurch gekennzeichnet, daß man eine trocken oder naß gemahlene Glasur mit einem härtenden Bindemittel mischt, bis man eine pastöse Masse erhält, man diese pastöse Masse extrudiert, das Extrudat in Teilchen zerschneidet, diese Teilchen einer raschen Oberflächentrocknung unterzieht und dann die so getrockneten Emailteilchen auf 100 bis 120°C bis zur Aushärtung des Bindemittels erwärmt.

2. Verfahren nach Anspruch 1, dadurch gekennzeichnet, daß das härtende Bindemittel aus einer Quellstärke besteht, die erhalten wird, indem die Dispersion einer pflanzlichen Stärke in kaltem Wasser (10 bis 30°C) in einem anteiligen Verhältnis Wasser : Stärke zwischen 40:60 und 70:30 mit warmem Wasser (80 bis 95°C) gemischt wird, so daß ein anteiliges Verhältnis Wasser : Stärke zwischen 60:40 und 95:5 erhalten wird.

3. Verfahren nach Anspruch 1, dadurch gekennzeichnet, daß das härtende Bindemittel aus gelatinisierter Cellulose besteht, die erhalten wird, indem die Dispersion eines Cellulosederivats in warmem Wasser (80 bis 95°C) mit kaltem Wasser (10 bis 30°C) gemischt wird, wobei das ursprüngliche anteilige Verhältnis Wasser : Cellulose zwischen 40:60 und 70:30 liegt und am Ende ein Verhältnis zwischen 80:20 und 98:2 entsteht.

4. Verfahren nach Anspruch 1, dadurch gekennzeichnet, daß zur Herstellung der pastösen Masse für die Extrusion 10 bis 70 Gewichtsanteile Quellstärke je 100 Gewichtsanteile Glasurschlicker verwendet werden.

5. Verfahren nach Anspruch 1, dadurch gekennzeichnet, daß zur Herstellung der pastösen Masse für die Extrusion 20 bis 50 Gewichtsanteile gelatinisierter Cellulose je 100 Gewichtsanteile Glasurschlicker verwendet werden.

6. Verfahren nach Anspruch 1, dadurch gekennzeichnet, daß zur Herstellung der pastösen Masse für die Extrusion 20 bis 110 Gewichtsanteile Quellstärke je 100 Gewichtsanteile Glasur in Pulverform verwendet werden.

7. Verfahren nach Anspruch 1, dadurch gekennzeichnet, daß zur Herstellung der pastösen Masse für die Extrusion 30 bis 80 Gewichtsanteile gelatinisierter Cellulose je 100 Gewichtsanteile Glasur in Pulverform verwendet werden.

8. Glasur-Agglomerate, hergestellt nach dem Verfahren gemäß einem der Patentansprüche 1 bis 7.

9. Werkstücke, glasiert mit einem Glasur-Agglomerat, das nach dem Verfahren gemäß einem der Patentansprüche 1 bis 7 hergestellt wurde.

**Claims**

1. A process for the production of glaze agglomerates, characterized in that a dry-ground or wet-ground glaze is mixed with a curing binder to form a paste, the paste thus formed is extruded, the extrudate is chopped into particles, the particles are subjected to rapid surface drying and the enamel particles thus dried are heated to 100 to 120°C to cure the binder.

2. A process as claimed in claim 1, characterized in that the curing binder consists of a pre-gelatinized starch which is obtained by mixing a dispersion of a vegetable starch in cold water (10 to 30°C) in a ratio of water to starch of 40:60 to 70:30 with warm water (80 to 95°C) so that a ratio of water to starch of 60:40 to 95:5 is obtained.

3. A process as claimed in claim 1, characterized in that the curing binder consists of gelatinized cellulose which is obtained by mixing a dispersion of a cellulose derivative in warm water (80 to 95°C) with cold water (10 to 30°C), the original ratio of water to cellulose being from 40:60 to 70:30 and a ratio of 80:20 to 98:2 being established at the end.

4. A process as claimed in claim 1, characterized in that 10 to 70 parts by weight pre-gelatinized starch are used to 100 parts by weight glaze slip to form the paste for extrusion.

5. A process as claimed in claim 1, characterized in that 20 to 50 parts by weight gelatinized cellulose are used to 100 parts by weight glaze slip to form the paste for extrusion.

6. A process as claimed in claim 1, characterized in that 20 to 110 parts by weight pre-gelatinized starch are used to 100 parts by weight glaze in powder form to form the paste for extrusion.

7. A process as claimed in claim 1, characterized in that 30 to 80 parts by weight gelatinized cellulose are used to 100 parts by weight glaze in powder form to prepare the paste for extrusion.

8. Glaze agglomerates produced by the process claimed in any of claims 1 to 7.

9. Workpieces glazed with a glaze agglomerate produced by the process claimed in any of claims 1 to 7.

## Revendications

1. Procédé de fabrication d'agglomérats de glaçure, caractérisé en ce qu'on mélange une glaçure broyée à sec ou par voie humide à un liant durcissant, jusqu'à ce que l'on obtienne une masse pâteuse, qu'on procède à l'extrusion de cette masse pâteuse, qu'on découpe l'extrudat en particules, qu'on soumet ces particules à un séchage superficiel rapide et qu'on chauffe ensuite les particules d'émail ainsi séchées à 100 à 120°C jusqu'à durcissement du liant.

2. Procédé selon la revendication 1, caractérisé en ce que le liant durcissant est en un amidon gonflant obtenu par mélange de la dispersion d'un amidon végétal dans de l'eau froide (10 à 30°C) en un rapport proportionnel eau : amidon compris entre 40:60 et 70:30 avec de l'eau chaude (80 à 95°C), de sorte que l'on obtient un rapport proportionnel eau : amidon compris entre 60:40 et 95:5.

3. Procédé selon la revendication 1, caractérisé en ce que le liant durcissant est en cellulose gélatinisée obtenue par mélange de la dispersion d'un dérivé cellulosique dans de l'eau chaude (80 à 95°C) avec de l'eau froide (10 à 30°C), le rapport proportionnel original eau : cellulose étant compris entre 40:60 et 70:30 et un rapport final compris entre 80:20 et 98:2 étant obtenu.

4. Procédé selon la revendication 1, caractérisé en ce qu'on utilise pour fabriquer la masse pâteuse destinée à l'extrusion 10 à 70 parties en poids d'amidon gonflant pour 100 parties en poids de barbotine de glaçure.

5. Procédé selon la revendication 1, caractérisé en ce qu'on utilise pour fabriquer la masse pâteuse destinée à l'extrusion 20 à 50 parties en poids de cellulose gélatinisée pour 100 parties en poids de barbotine de glaçure.

6. Procédé selon la revendication 1, caractérisé en ce qu'on utilise pour fabriquer la masse pâteuse destinée à l'extrusion 20 à 110 parties en poids d'amidon gonflant pour 100 parties en poids de glaçure sous forme pulvérulente.

7. Procédé selon la revendication 1, caractérisé en ce qu'on utilise pour fabriquer la masse pâteuse destinée à l'extrusion 30 à 80 parties en poids de cellulose gélatinisée pour 100 parties en poids de glaçure sous forme pulvérulente.

8. Agglomérats de glaçure fabriqués selon le procédé selon une des revendications 1 à 7.

9. Pièces glacées à l'aide d'un agglomérat de glaçure fabriqué selon le procédé selon une des revendications 1 à 7.